# EUROPEAN PATENT APPLICATION

(11) **EP 3 050 934 A1**
(43) Date of publication of application: **03.08.2016**
(21) Application number: 15382032.9
(22) Date of filing: 02.02.2015
(51) Int. Cl.: C09J 131/04

(54) **Adhesive composition**

(71) Applicant: Ceys, S. A., 08907 L'Hospitalet de Llobregat (ES)
(72) Inventor: Barqueros Sánchez, Bernardo, 08907 L'HOSPITALET DE LLOBREGAT (ES); Mateo Marqués, Oscar, 08907 L'HOSPITALET DE LLOBREGAT (ES)
(74) Representative: Oficina Ponti, SLP

(57) **Abstract**

The present invention relates to an adhesive composition comprising at least 50 wt % of polyvinyl acetate (PVA), wherein said composition further comprises a natural flour selected from: mill, wheat, spelt, rye, oat, barley, rice and soy, or a mixture thereof and further wherein wood fibers are not present

## Description

### Field of the invention

The present invention relates to the field of adhesives. In particular the present invention relates to polyvinyl acetate-based adhesives comprising a natural flour selected from_mill, wheat, spelt, rye, oat, barley, rice and soy.

### Background

Polyvinyl acetate (PVA)-based adhesives are especially designed to join all kind of wood for all professional purposes. This kind of adhesives cure by loss of its fluid carrier, in this case water. The polymer, dispersed in the water, separates out as a sticky mass which gives good initial tack and then dries to a strong film which bonds the substrates together. The rate of cure is controlled by the speed with which water is lost and generally, to obtain sound joints, one of the substrates must be absorbent.

Alternatively, the water is driven off completely before the joint is closed. Two such coated surfaces will bond immediately, in the case of rubber-based contact adhesives. Alternatively, the adhesive can be designed to be reactivated by solvent, heat or to be pressure-sensitive.

A common and well-known way for improving PVA adhesives is to mix them with wood fibers. By means of this, a better gap filling capacity, sandability and wood appearance when cured are achieved. Nevertheless, it has been disclosed, as shown in the Material Safety Data Sheet (MSDS) (see http://www.awf.com/downloads/Safety%20Data%20Sheet%20for%20Wood%20Flour% 20V1.0%2009252012.pdf) that wood dust, depending on species, may cause dermatitis upon prolonged, repetitive contact; may cause respiratory sensitization and/or irritations. International Agency for Research on Cancer (IARC) classifies wood dust as a carcinogen to humans. This classification is based primarily on IARC's evaluation of increased rash in the occurrence of Aden carcinomas of the nasal cavities and para nasal sinuses associated with exposure to wood dust.

Accordingly, the use of wood fibers as a reinforcing filler for PVA has been proved as dangerous for workers that are exposed to wood dust inhalation during production, or even for users that are exposed to wood dust when glue is sanded and a mixture of wood and glue is created.

The present inventors have found an alternative to the use of wood fibers in polyvinyl acetate-based adhesives. They have surprisingly found that the use of flour from vegetal species such as: mill, wheat, spelt, rye, oat, barley, rice and soy, can avoid this problem of handling a cancerous product, while improving some of the properties of the adhesive composition.

### Description of the invention

In a first aspect, the present invention relates to an adhesive composition comprising at least 50 wt % of polyvinyl acetate (PVA), preferably at least 60 wt% of polyvinyl acetate (PVA), more preferably at least 70 wt% of polyvinyl acetate (PVA), more preferably at least 80 wt% of polyvinyl acetate (PVA) and even more preferably at least 90 wt% of polyvinyl acetate (PVA), wherein said composition further comprises a natural flour selected from: mill, wheat, spelt, rye, oat, barley, rice and soy, or a mixture thereof and further wherein wood fibers are not present.

In the present disclosure "natural flour" should be understood as a flour obtained from a natural source, such as a plant, selected from mill, wheat, spelt, rye, oat, barley, rice and soy, or a mixture thereof.

In a preferred embodiment, said natural flour is present in an amount between 0.1-15 wt% of the whole composition.

In another preferred embodiment, said natural flour is mill flour.

In another preferred embodiment, the adhesive composition further comprises one or more of a pigment, an antifoam agent, an inorganic filler, a preservative and a coalescent agent.

In the present disclosure, when reference is made to a component of the composition (e.g. "a pigment" or just "pigment") it should be understood that this component can be present as a mixture of compounds under this name (e.g. pigment).

Preferably, said pigment is selected from an aqueous dispersion of iron oxide and a pigmentary organic slurry, or a combination thereof.

Preferably, said antifoam agent is selected from insoluble oils, polydimethylsiloxanes and other silicone-based compounds, aqueous emulsions such as waxes dispersed in water, long chain fatty acid esters and alkyl poliacrylates.

Preferably, said inorganic filler is selected from sulphates, carbonates, silicates and talc, or a combination thereof.

Preferably, said preservative is selected from MIT (Methylisothiazolinone), BIT (1,2-benzisothiazolin-3-one), OIT (2-n-octyl-4-isothiazolin-3-one), Bronopol, CIT (5-Chloro-2-Methyl-Isothiazolin) or a combination thereof.

Preferably, said coalescent agent is a solvent of high molecular weight, such as alcohol esters.

In a further preferred embodiment, the adhesive composition comprises:
- PVA between 50 and 90 wt%
- antifoam agent(s) between 0.1 and 0.500 wt%
- pigment(s) between 0.01-0.02
- inorganic filler(s) between 5 and 30 wt%
- coalescent agent(s) between 0.05 and 0.5 wt%
- plant-based flour(s), preferably from mill, between 0.1 and 15 wt%
- preservative(s) between 0.1 and 2 wt%.

As shown in the Examples section, the adhesive composition of the present invention presents a much higher sandability (resistive force of friction) as long as a better visual aspect (important for the finishes in binding materials), while retaining at acceptable values the properties of hardness and tensile strength.

In a second aspect, the present invention relates to a process for manufacturing the adhesive composition, according to any of the embodiments disclosed herein, wherein said process comprises the step of mixing the components of the composition according to any of the embodiments disclosed herein.

In a preferred embodiment, said mixture is performed in a mixer equipped with high shear cowles disks.

In a third aspect, the present invention relates to the use of a natural flour selected from: mill, wheat, spelt, rye, oat, barley, rice and soy or a mixture thereof, as a filler, in an adhesive composition comprising at least 50 wt % of polyvinyl acetate (PVA), preferably at least 60 wt% of polyvinyl acetate (PVA), more preferably at least 70 wt% of polyvinyl acetate (PVA), more preferably at least 80 wt% of polyvinyl acetate (PVA) and even more preferably at least 90 wt% of polyvinyl acetate (PVA), and with no wood fibers present in said composition.

In a preferred embodiment, said natural flour is used in the composition in an amount between 0.1-15 wt% of the whole composition.

In another preferred embodiment, said natural flour used in the composition is mill flour.

Preferably, said natural flour is used in a composition further comprising one or more of a pigment, an antifoam agent, an inorganic filler, a preservative and a coalescent agent as already defined above for the first aspect of the invention.

### EXAMPLES

The present invention is further disclosed by way of examples which only intend to illustrate the present invention and by no means are limiting the scope thereof.

### Production of an example of an adhesive composition according to the present invention:

### Production equipment:

Mixer with cylindrical vessel and cowles equipped with cooling and vacuum device

### Process:

A PVA dispersion is added first to the mixer and the mixing is started at minimum rpm. The antifoaming agent(s), coalescent agent(s), preservative agent(s) are added slowly. After 15 minutes of mixing at low rpm, the mixing speed is increased and the inorganic filler(s), pigment(s) and plant-based flour(s) are added. The mixing is kept for 10 minutes. The mixing speed is reduced to minimum and the vacuum equipment is connected in order to allow air bubbles to exit. After 5 minutes the product is obtained.

### Comparative examples

In addition, several comparative examples have been developed in order to determine the advantageous properties of the composition of the present invention.

Comparative table 1: Variation of PVA and inorganic filler, while maintaining the same wt. % of flour derived from plants.

| | ***C1*** | ***C2*** | ***C3*** |
|---|---|---|---|
| PVA dispersion | ***50*** | ***65*** | ***80*** |
| Antifoaming | ***0,2*** | ***0,2*** | ***0,2*** |
| Pigment | ***0,1*** | ***0,1*** | ***0,1*** |
| Inorganic filler | ***44*** | ***29*** | ***14*** |
| Coalescent agent | ***0*,*1*** | ***0*,*1*** | ***0***,***1*** |
| Plant-based flour (mill) | ***5*** | ***5*** | ***5*** |
| Preservative | ***0, 6*** | ***0, 6*** | ***0, 6*** |

| PROPERTIES | | | |
|---|---|---|---|
| PH | ***4,5*** | ***4,5*** | ***4,5*** |
| VISCOSITY | ***28.500 cps*** | ***10*.*000 cps*** | ***9.000 cps*** |
| TENSILE STRENGTH | ***55 kg***/***cm2*** | ***84 kg***/***cm2*** | ***125,39 kg***/***cm2*** |

By comparing C1, C2 and C3, these data allow to conclude that a PVA dispersion at 50 wt.% is the minimum % of PVA for keeping the acceptable values of viscosity and tensile strength. With these values, a liquid glue has still an acceptable performance. Optimally, the viscosity is under 15.000 cps and the tensile strength is higher than 80 kg/cm².

Comparative table 2: Variation of wt% of flour derived from plants and inorganic filler, while maintaining the same PVA wt%.

| | ***C4*** | ***C5*** | ***C6*** | ***C7*** |
|---|---|---|---|---|
| PVA dispersion | ***75*** | ***75*** | ***75*** | ***75*** |
| Antifoaming | ***0,2*** | ***0,2*** | ***0,2*** | ***0,2*** |
| Pigment | ***0,1*** | ***0,1*** | ***0,1*** | ***0,1*** |
| Inorganic filler | ***24*** | ***19*** | ***14*** | ***4*** |
| Coalescent agen | ***0,1*** | ***0,1*** | ***0,1*** | ***0,1*** |
| Plant-based flour (mill) | ***0*** | ***5*** | ***10*** | ***20*** |
| Preservative | ***0,6*** | ***0,6*** | ***0,6*** | ***0,6*** |

| ***PROPERTIES*** | | | | |
|---|---|---|---|---|
| PH | ***4,5*** | ***4,5*** | ***4,5*** | ***4,5*** |
| VISCOSITY | ***8500 cps*** | ***9000 cps*** | ***17500 cps*** | ***42500 cps*** |
| TENSILE STRENGTH | ***141 kg*/*cm2*** | ***125 kg*/*cm2*** | ***114 kg*/*cm2*** | ***104 kg*/*cm2*** |
| HARDNESS SHORE A | ***95*** | ***90*** | ***85*** | ***82*** |
| RESISTIVE FORCE OF FRICTION (SANDABILITY) | ***Very bad*** | ***Good*** | ***Good*** | ***Good but the film is a bit soft*** |
| VISUAL ASPECT (visual similarity to natural oak wood) | | | | |
| BRIGHTNESS (1(low)-5 (high)) | ***1*** | ***4*** | ***4*** | ***5*** |
| COLOUR (1(low)-5 (high)) | ***2*** | ***4*** | ***4*** | ***3*** |
| TEXTURE (1(low) - 5 (high)) | ***1*** | ***5*** | ***5*** | ***5*** |

| | | | | |
|---|---|---|---|---|
| pH: measurement made with a digital pH meter Viscosity: Measured by using a Brookfield Viscometer Tensile strength: shear tensile test in a dynamometric equipment. According to an internal test method, 2 cm² of 2 pieces of beech wood are overlapped and allowed to cure for 1 week at controlled temperature conditions. They are then submitted to a tensile stress to assess the tensile breaking strength of the binding. Hardness (Shore A): As shown in e.g. http://en.wikipedia.org/wiki/Shore_durometer. In particular, on a totally cured film of elastic product, the surface hardness is evaluated according to the elastic reaction thereof when applying thereon a perpendicular sharp force. This test is performed with durometer for Shore A and provides data for Hardness on a scale of 0 to 100, 0 being minimum and 100 maximum hardness. Sandability: Assessment of ease for sanding and malleability of the adhesive by a wooden block with a No. 60 sandpaper incorporated thereon. The sanding resistance to sliding of the sandpaper is evaluated. Visual aspect: Comparative visual assessment assessing brightness, colour and texture vs. natural oak wood as a standard. C4: It has no plant-based flour and the properties are shown as bad or very bad. C5-C6: These are optimal composition with good or very good properties. C7: This is a good composition although the viscosity is a bit higher than the optimal range which causes the film to be a bit soft. | | | | |

## Claims

1. Adhesive composition comprising at least 50 wt % of polyvinyl acetate (PVA), wherein said composition further comprises a natural flour selected from: mill, wheat, spelt, rye, oat, barley, rice and soy, or a mixture thereof and further wherein wood fibers are not present.

2. Adhesive composition, according to claim 1, wherein the amount of polyvinyl acetate (PVA) in the composition is at least 60 wt%, preferably at least 70 wt%.

3. Adhesive composition, according to claim 1 or 2, wherein said natural flour is present in an amount between 0.1-15 wt% of the whole composition.

4. Adhesive composition, according to any of claims 1 to 3, wherein said natural flour is mill flour.

5. Adhesive composition, according to any of the preceding claims, wherein said composition further comprises one or more of a pigment, an antifoam agent, an inorganic filler, a preservative and a coalescent agent.

6. Adhesive composition, according to claim 5, wherein said pigment is selected from an aqueous dispersion of iron oxide and a pigmentary organic slurry, or a combination thereof; said antifoam agent is selected from oil, dust, aqueous emulsions, silicone, long chain fatty acid esters and alkyl poliacrylates, or a combination thereof; said inorganic filler is selected from sulphates, carbonates, silicates and talc, or a combination thereof; said preservative is selected from MIT (Methylisothiazolinone), BIT (1,2-benzisothiazolin-3-one), OIT (2-n-octyl-4-isothiazolin-3-one), Bronopol, CIT (5-Chloro-2-Methyl-Isothiazolin) or a combination thereof; and said coalescent agent is a solvent of high molecular weight.

7. Adhesive composition, according to any of the preceding claims, comprising:
- PVA between 50 and 90 wt%
- at least one antifoam agent between 0.1 and 0.500 wt%
- at least one pigment between 0.01-0.02
- at least one inorganic filler between 5 and 30 wt%
- at least one coalescent agent between 0.05 and 0.5 wt%
- at least one plant-based flour, preferably from mill, between 0.1 and 15 wt%
- at least one preservative between 0.1 and 2 wt%.

8. Process for manufacturing the adhesive composition, according to any of the preceding claims, wherein said process comprises the step of mixing the components of the composition.

9. Process, according to claim 8, wherein said mixture is performed in a mixer equipped with high shear cowles disks.

10. Use of a natural flour selected from: mill, wheat, spelt, rye, oat, barley, rice and soy or a mixture thereof in an adhesive composition comprising at least 50 wt % of polyvinyl acetate (PVA) and with no wood fibers present in said composition.

11. Use, according to claim 10, wherein said natural flour is used in the composition in an amount between 0.1-15 wt% of the whole composition.

12. Use, according to claims 10 or 11, wherein said natural flour is mill flour.

13. Use, according to any of claims 10 to 12, wherein said natural flour is used in a composition further comprising one or more of a pigment, an antifoam agent, an inorganic filler, a preservative and a coalescent agent.

14. Use, according to claim 13, wherein said natural flour is used in a composition wherein said pigment is selected from an aqueous dispersion of iron oxide and a pigmentary organic slurry, or a combination thereof; said antifoam agent is selected from insoluble oils, polydimethylsiloxanes and other silicone-based compounds, waxes dispersed in water, long chain fatty acid esters and alkyl poliacrylates, or a combination thereof; said inorganic filler is selected from sulphates, carbonates, silicates and talc, or a combination thereof; said preservative is selected from MIT (Methylisothiazolinone), BIT (1,2-benzisothiazolin-3-one), OIT (2-n-octyl-4-isothiazolin-3-one), Bronopol, CIT (5-Chloro-2-Methyl-Isothiazolin) or a combination thereof; and said coalescent agent is a solvent of high molecular weight.
